# EUROPEAN PATENT APPLICATION

(11) **EP 1 694 072 A1**
(43) Date of publication of application: **23.08.2006**
(21) Application number: 06110177.0
(22) Date of filing: 20.02.2006
(51) Int. Cl.: H04N 7/18

(54) **Surveillance system for masking privacy zone and method of setting mask zone**

(30) Priority: 21.02.2005 KR 200514275
(71) Applicant: Samsung Electronics Co., Ltd., Suwon-si, Gyeonggi-Do (KR)
(72) Inventor: Park, Hye-young, Gyeonggi-do, Suwon-si (KR)
(74) Representative: Waddington, Richard

(57) **Abstract**

Provided is a surveillance system for masking a privacy zone and a method of setting up a mask zone. The surveillance system comprises a photographing unit (100), a zone setting unit (140), a display unit (120) and an image signal processor (110). The photographing photographs a surveillance zone. The zone setting unit (140) sets up a mask zone that masks a privacy zone at least partly comprised within the surveillance zone. The display unit (120) displays vertices of the mask zone and the process of connecting the vertices according to the mask zone setting. The image signal processor (110) signal processes image signals corresponding to the surveillance zone and mask image signals corresponding to the mask zone. Accordingly, a user can confirm the process of connecting the points of a mask zone, thereby creating a correct mask zone.

## Description

The present invention relates to a surveillance system for masking a privacy zone and a method of setting a mask zone. More specifically, the present invention relates to a surveillance system and a method of setting a mask zone in which the process of setting a mask zone is displayed on a screen. The mask zone is masked so that a specific portion of an image taken by a surveillance camera is not displayed on a screen.

Surveillance cameras are installed in buildings or on roads in order to prevent burglary or other crime. Images taken by the surveillance cameras are displayed on monitors in police stations or management offices, and inform users, such as police officers or guards, of the current states of the places where the surveillance cameras are installed. Systems displaying the images taken by surveillance cameras are called surveillance systems. A surveillance system comprises a controller for controlling the operations of surveillance cameras so that a user can control the horizontal panning, vertical tilting, and zooming operations of the surveillance cameras.

Recently, a problem with surveillance systems has been the issue of privacy invasion. In order to solve this problem, surveillance systems capable of masking a specific portion of an image displayed on a monitor are being developed.

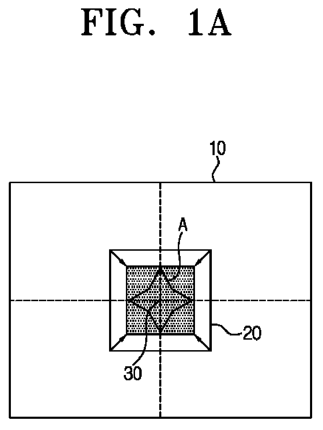

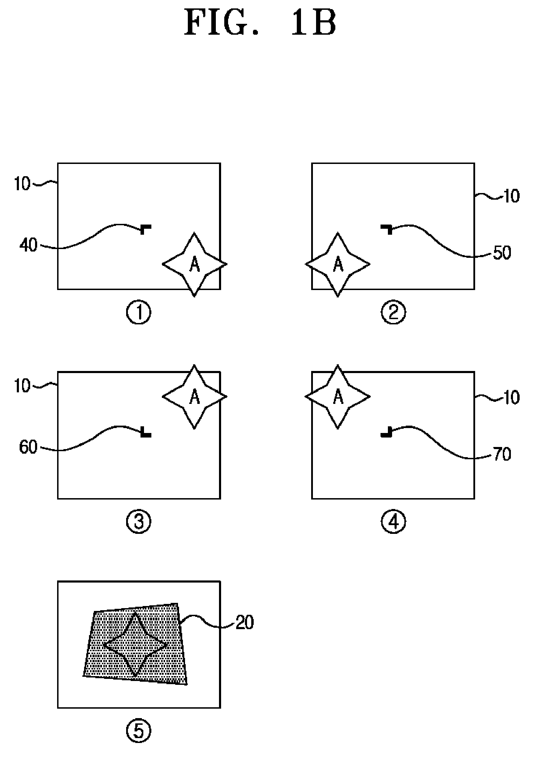

FIGS. 1A and 1B show a conventional method of masking a privacy zone in a conventional surveillance system.

Referring to FIG. 1A, a user controls a controller (not shown), and positions privacy zone 'A' to be masked at the center 30 of screen 10. Then, the user changes the area of mask zone 20, and sets the area of mask zone 20 so that privacy zone 'A' will not be displayed on screen 10. Then, data corresponding to the coordinates of the center 30 of mask zone 20 and four points, which are the vertices of mask zone 20, are written into memory (not shown).

Here, if the user manipulates the controller to control a surveillance camera to perform horizontal panning, vertical tilting, and zooming operations, the position and area of mask zone 20 are modified accordingly, thereby masking privacy zone 'A'. In the conventional surveillance system, the mask zone being setup is a rectangle that maintains a constant ratio of width to height. Therefore the mask zone may not precisely match the area needing to be masked. In addition, if privacy zone 'A' is larger than screen 10, mask zone 20 cannot be setup. FIG. 1B shows another conventional method of masking a privacy zone 'A' that solves these problems.

Referring to FIG. 1B, a user handles a controller, as shown in process ①, positions a first point 40 of mask zone 20 that overlays privacy zone 'A' at the center of screen 10, and creates data corresponding to the first point 40. In processes ②, ③, and ④, data corresponding to a second point 50, third point 60, and fourth point 70 is created in the same way as process ①. When the four points 40, 50, 60, 70 are created, the setup of mask zone 20 is completed. As shown in process ⑤, mask zone 20 is displayed so that privacy zone 'A' is not displayed on the screen.

In this way, a mask zone 20 can be set for a privacy zone 'A' having a larger area than that of the area displayed on monitor 10. In addition, mask zone 20 can be set to precisely match the area needing to be masked. However, in the conventional method explained in FIG. 1B, mask zone 20 is displayed on the screen only after setting all four points 40, 50, 60 and 70. Therefore, a user cannot know whether the area has been correctly selected or not while creating each point, thereby encountering difficulties in setting up a correct mask zone 20.

Exemplary embodiments of the present invention seek to address at least the above problems and/or disadvantages and to provide at least the advantages described below. The present invention provides a surveillance system for masking a privacy zone and a method of setting a mask zone in which the process of setting a mask zone is displayed on a screen. The mask zone is masked so that a privacy zone is not displayed on a screen so that a mask zone can be correctly setup.

According to the present invention there is provided an apparatus and method as set forth in the appended claims. Preferred features of the invention will be apparent from the dependent claims, and the description which follows.

According to an aspect of the present invention, there is provided a surveillance system, the system comprising a photographing unit, a zone setting unit, a display unit and an image signal processor. The photographing unit is operable to photograph a surveillance zone. The zone setting unit is operable to set up a mask zone that is adapted to mask a privacy zone at least partly comprised within the surveillance zone. The display unit is operable to display vertices of the mask zone and the process of connecting the vertices according to the mask zone setting. The image signal processor signal is operable to process image signals corresponding to the surveillance zone and mask image signals corresponding to the mask zone.

In addition, the surveillance system preferably further comprises a storage unit for storing the position and area of the mask zone created by the zone setting unit.

Here, the zone setting unit is preferably operable to calculate the position and area of the privacy zone from the currently photographed surveillance zone, and to change the position and area of the mask zone stored in the storage unit to the calculated position and area of the privacy zone.

Then, the display unit is preferably operable to display the mask zone modified according to the position and area of the privacy zone on a screen, thereby masking the privacy zone and displaying it on a screen.

In addition, the surveillance system preferably further comprises a control panel for receiving external control commands, a controller for outputting adjust-control commands in order to control the photographing unit according to the external control commands, and a driver for driving the photographing unit according to the adjust-control signals.

Here, the zone setting unit is preferably operable to set at least three points as vertices according to setting-control commands received through the control panel.

According to another aspect of the invention, a method of setting a mask zone of the surveillance system comprises the step of photographing a surveillance zone. A mask zone is preferably created for masking a privacy zone included in the surveillance zone. Image signals are preferably signal processed that correspond to the surveillance zone and mask image signals are preferably processed that correspond to the mask zone. Further, vertices of the mask zone are preferably displayed as is the process of connecting the vertices according to the mask zone setting.

In addition, a method of setting a mask zone of the surveillance system preferably further comprises a step of storing the position and area of the mask zone.

At this point, the method preferably further comprises a step of calculating the position and area of the privacy zone from the currently photographed surveillance zone, and changing the position and area of the mask zone stored in the storage unit to the calculated position and area of the privacy zone.

Then, the method preferably further comprises a step of displaying on a screen a mask zone modified according to the position and area of the privacy zone on a screen.

Other objects, advantages, and salient features of the invention will become apparent to those skilled in the art from the following detailed description, which, taken in conjunction with the annexed drawings, discloses exemplary embodiments of the invention.

For a better understanding of the invention, and to show how embodiments of the same may be carried into effect, reference will now be made, by way of example, to the accompanying diagrammatic drawings in which:
FIGS. 1A and 1B show conventional methods of masking a privacy zone in a conventional surveillance system;
FIG. 2 is a block diagram schematically showing a configuration of a surveillance system according to an exemplary embodiment of the invention;
FIGS. 3A and 3B show a method of masking a privacy zone in the surveillance system according to an exemplary embodiment of the invention; and
FIG. 4 is a flowchart explaining the method of masking a privacy zone in the surveillance system according to an exemplary embodiment of the invention.

Throughout the drawings, the same drawing reference numerals will be understood to refer to the same elements, features, and structures.

The matters defined in the description such as a detailed construction and elements are provided to assist in a comprehensive understanding of the embodiments of the invention and are merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

In view of the introduction above, there is a need for an improved method of setting a mask zone in which the connection status of a mask zone masking a privacy zone is displayed on a screen so that a user can confirm the connection status. Therefore, a user can setup a mask zone with greater accuracy and precision.

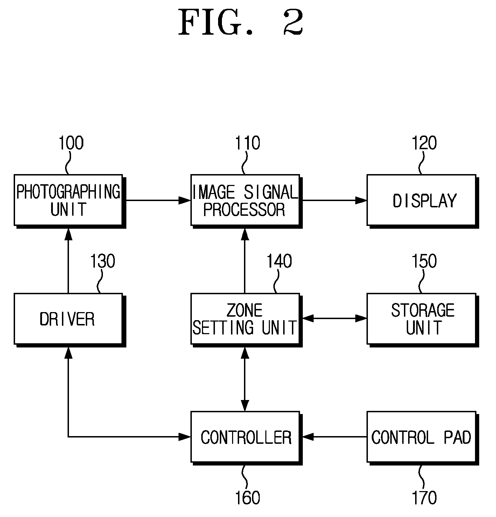

FIG. 2 is a block diagram schematically showing a configuration of a surveillance system according to an exemplary embodiment of the invention.

The surveillance system comprises a photographing unit 100, an image signal processor 110, a display unit 120, a driver 130, a zone setting unit 140, a storage unit 150, a controller 160, and a control pad 170.

The photographing unit 100 is a Charge Coupled Device (CCD) camera photographing a certain surveillance zone. A CCD camera can perform horizontal panning, vertical tilting, and zooming operations, take optical images on the CCD, and output electrical image signals. The driver 130 drives the photographing unit 100 so that the photographing unit 100 performs horizontal panning, vertical tilting and zooming operations according to adjustment-control signals received from the controller 160 described below.

The image signal processor 110 signal processes the image signals received from the photographing unit 100, and transfers the processed image signals to the display unit 120 described below. In addition, when a privacy zone is at least partially within a surveillance zone being photographed, the image signal processor 110 masks the privacy zone so that it is not displayed on a screen. The mask zone that performs masking on the privacy zone is setup by the zone setting unit 140 described below. The image signal processor 110 signal processes the mask image signals of the mask zone setup by the zone setting unit 140, thereby masking the privacy zone.

The image signal processor 110 then signal processes the signals generated during the process of setting a mask zone performed by the zone setting unit 140 and transfers it to the display. In other word, if a first point, which is a vertex of a mask zone, is created by the zone setting unit 140, the first point is signal processed for display on the display unit 120. If a second point is created, signal processing is performed so that a line connecting the first point and the second point is displayed on the display unit 120. Thus, the process of connecting each created point on the display unit 120 in the form of a line or an area is displayed.

The display unit 120 is a display device such as a Liquid Crystal Display (LCD) outputting signal processed image signals on a screen. The display unit 120 displays the process of connecting the first point, second point and up to the N^{th} point, which are vertices of a mask zone on a screen in the form of a line or an area. In a case where the photographing unit 100 performs horizontal panning, vertical tilting and zooming operations, and photographs a surveillance zone comprising a privacy zone, the display unit 120 displays the mask zone signal processed by the image signal processor 110 on a screen.

The control pad 170 receives users' control commands so that users can control various functions of the surveillance system. In other words, through the control pad 170, control commands for controlling horizontal panning, vertical tilting, and zooming operations of the photographing unit 100 are received from a user. Further, various commands are received from a user for setting up the form in which the photographed image signals are displayed on the display unit 120.

The controller 160 outputs adjustment-control signals for controlling the photographing unit 100 according to control commands received through the control pad 170. In addition, according to the control commands received through the control pad 170, the controller outputs setting-control commands for controlling the zone setting unit 140 so as to setup a mask zone.

The zone setting unit 140 sets the position and area of a mask zone for masking a privacy zone included in a surveillance zone according to setting-control commands received from the controller 160, and stores the position and area in the storage unit 150 described below. The zone setting unit 140 creates three or more points used to makeup a mask zone according to a user's setting-control commands, connects the created points, and stores the created position and mask zone area in the storage unit 150.

In order to mask and display a privacy zone on the display unit 120 according to a user's setting-control commands, the zone setting unit 140 applies the mask zone stored in the storage unit 150 to the image signals currently being photographed. In other words, after calculating the position and area of a privacy zone included in the currently photographed surveillance zone, the position and area of a mask zone for masking the privacy zone is calculated and transferred to the image signal processor 110.

The storage unit 150 stores the data corresponding to the position of each point needed to configure a mask zone, the point being set by the zone setting unit 140, and the area of the mask zone.

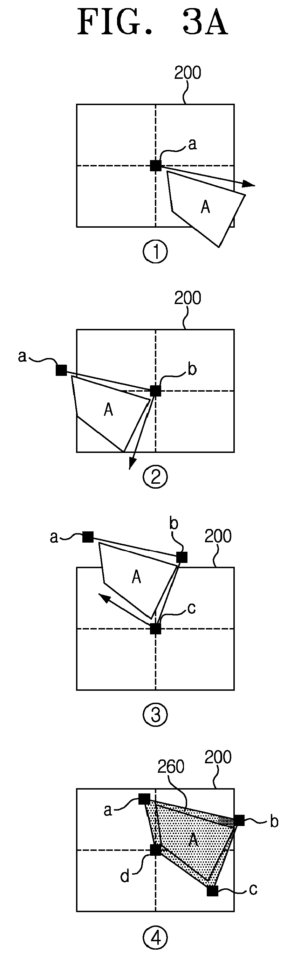

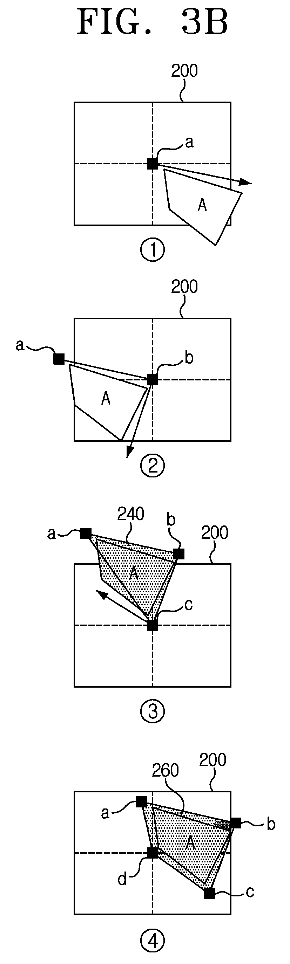

FIGS. 3A and 3B show a method of masking a privacy zone in a surveillance system according to an exemplary embodiment of the invention.

Referring to FIG. 3A, in process ①, a user enters a control command for controlling the horizontal panning, vertical tilting, and zooming operations of the photographing unit 100 through the control pad 170 in order to position a first point 'a' at the center of a screen 200, and creates position data for the first point 'a'. At this point, the first point 'a' is displayed on the screen 200.

Then, in process ②, a user controls the photographing unit 100 through the control pad 170 in order to position a second point 'b' at the center of the screen 200, and creates position data for the second point 'b'. At this point, the line connecting the first point 'a' and the second point 'b' is displayed on the screen 200, so that a user can confirm the connection status of each point used to makeup the mask zone 220.

Then, in process ③, a user controls the photographing unit 100 through the control pad 170 in order to position a third point 'c' at the center of the screen 200, and creates position data for the third point 'c'. At this point, the lines connecting the first point 'a', second point 'b', and third point 'c' are displayed on the screen 200 so that a user can confirm the connection status of each point configuring the mask zone 220.

Then, a user controls the photographing unit 100 through the control pad 170 in order to position a fourth point 'd' at the center of the screen 200, and creates position data for the fourth point 'd'. When a user creates the fourth point 'd' and completes the setup of mask zone 220, as shown in process ④, the privacy zone 'A' is masked and is not displayed on the screen 200 by the mask zone 220 that is made up using the vertices of the first point 'a', second point 'b', third point 'c', and fourth point `d'. Of course, the use of four points is merely exemplary as three or more points may be used, and the same method can be used to create a mask zone 220 regardless of the number of points.

Referring to FIG. 3B, the processes ① and ② and are the same as those of FIG. 3A. In process ③, a user controls the photographing unit 100 through the control pad 170 in order to position a third point 'c' at the center of the screen 200, and creates position data for the third point 'c'. At this point, the line connecting the first point 'a', second point 'b', and third point 'c' is displayed on the screen 200. Here, if a user creates position data for a third point 'c' again, the mask zone 240 is modified by the third point 'c' that is displayed on the screen. When a user completes setting a mask zone 240, the position and area of the mask zone 240 are stored in the storage unit 150.

If a user has not completed setting up a mask zone 240, as shown in process ④, the user positions a fourth point 'd' at the center of the screen 200, and creates position data for the fourth point 'd'. When a user creates the fourth point 'd' and completes setting a mask zone 260, as shown in process ④, the mask zone 260 setup using the vertices of the first point 'a', second point 'b', third point 'c', and fourth point 'd' that is displayed on the screen. Of course, the use of four points is merely exemplary as three or more points may be used, and the same method can be used to create a mask zone 220 regardless of the number of points.

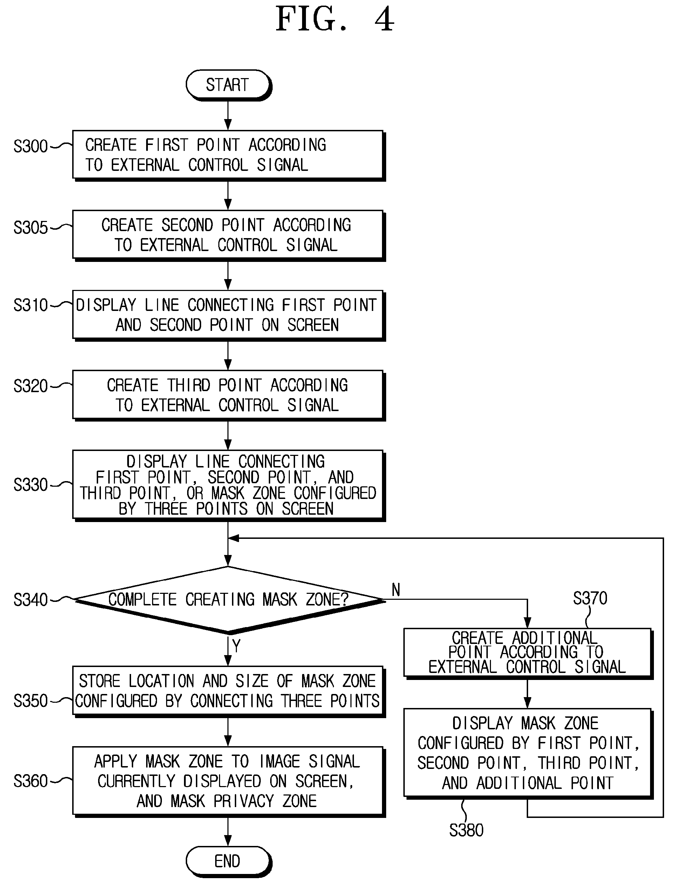

FIG. 4 is a flowchart explaining a method of masking a privacy zone in a surveillance system according to an exemplary embodiment of the invention.

Referring to FIG. 4, first, the zone setting unit 140 creates a first point 'a' according to an external control signal. In other words, as shown in the examples of FIGS. 3A and 3B, if a user adjusts the photographing unit 100 through the control pad 170 in order to position a first point 'a' at the center of a screen 200, and enters a setting-control command, the zone setting unit 140 creates position data for the first point 'a' in step S300.

In the same way, if a user adjusts the photographing unit 100 through the control pad 170 in order to position a second point 'b' at the center of the screen 200, and enters a setting-control command, the zone setting unit 140 creates position data for the second point 'b' in step 5305.

When the second point 'b' is created, a line connecting the first point 'a' and the second point 'b' is displayed on the display unit 120 in step S310.

Then, if a user adjusts the photographing unit 100 through the control pad 170 in order to position a third point 'c' at the center of the screen 200, and enters a setting-control command, the zone setting unit 140 creates position data for the third point 'c' in step 5320.

When the third point 'c' is created, a line connecting the first point 'a', second point 'b', and third point 'c' is displayed, or, as shown in process ③ of FIG. 3B, a mask zone 240 having three points 'a', 'b', 'c' with connecting vertices is displayed on the display unit 120 in step S330.

At this point, if a user finishes creating points and setting up a mask zone 240 in step S340, the position and area of the mask zone 240 configured by connecting the points is stored in the storage unit 150 in step S350.

The mask zone 240 is then applied to the image signals modified by the horizontal panning, vertical tilting, and zooming operations of the photographing unit 100 and displayed on a screen, thereby masking and displaying a privacy zone 'A' in step S360.

If, in step S340, a user has not finished creating points, but adjusts the photographing unit 100 through the control panel 170 in order to position an additional point 'd' at the center of the screen 200, and enters a setting-control command, the zone setting unit 140 creates position data for the additional point 'd' in step S370.

Then, the display unit 120 displays a mask zone 220, 260 configured by connecting the first point 'a', second point 'b', third point 'c', and added fourth point 'd' on a screen in step S380. In this way, a user can continue to create additional points using steps S370 and S380. The display unit 120 then displays a mask zone 220, 260 configured with the plurality of points on a screen in step S380.

The position and area of a mask zone 220, 240, 260 configured with a plurality of points is stored in the storage unit in step S350. The position and size of a privacy zone 'A' included in a surveillance zone currently being photographed is calculated, and the position and size of a mask zone 220, 240, 260 for masking the privacy zone 'A' is calculated. Then, the privacy zone 'A' is masked and displayed on a screen in step S360.

Through the processes described above, a user can confirm the process of connecting the points that makes up a mask zone 220, 240, 260, when setting a mask zone 220, 240, 260 for masking a privacy zone 'A'.

As explained above, according to an exemplary embodiment of the invention, the connection status of a mask zone masking a privacy zone is displayed on a screen so that a user can confirm the connection status. Therefore, a user can set a mask zone more accurately and precisely.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A surveillance system comprising:
a photographing unit (100) for photographing a surveillance zone;
a zone setting unit (140) for setting a mask zone that masks a privacy zone at least partly comprised within the surveillance zone;
a display unit (120) for displaying vertices of the mask zone and a process of connecting the vertices according to a mask zone setting; and
an image signal processor (110) for signal processing image signals corresponding to the surveillance zone and mask image signals corresponding to the mask zone.

2. The surveillance system as claimed in claim 1, further comprising: a storage unit (150) for storing a position and area of the mask zone created by the zone setting unit (140).

3. The surveillance system as claimed in claim 2, wherein the zone setting unit (140) is operable to calculate the position and area of the privacy zone from a currently photographed surveillance zone, and to change a position and area of a mask zone stored in the storage unit (150) to the calculated position and area of the privacy zone.

4. The surveillance system as claimed in claim 3, wherein the display unit (120) is operable to display a mask zone modified according to the position and area of the privacy zone on a screen, thereby masking the privacy zone and displaying it on a screen.

5. The surveillance system as claimed in any preceding claim, further comprising:
a control panel (170) for receiving external control commands;
a controller for outputting adjust-control commands in order to control the photographing unit (100) according to the external control commands; and
a driver (130) for driving the photographing unit (100) according to the adjust-control commands.

6. The surveillance system as claimed in claim 5, wherein the zone setting unit (140) is operable to set at least three points as vertices according to setting-control commands received through the control panel (170).

7. A method of setting a mask zone for a surveillance system, the method comprising the steps of:
photographing a surveillance zone;
creating a mask zone for masking a privacy zone at least partly comprised within the surveillance zone;
signal processing image signals corresponding to the surveillance zone and mask image signals corresponding to the mask zone; and
displaying vertices of the mask zone and a process of connecting the vertices according to a mask zone setting.

8. The method as claimed in claim 7, further comprising a step of: storing a position and area of the mask zone.

9. The method as claimed in claim 8, further comprising a step of: calculating the position and area of the privacy zone from a currently photographed surveillance zone and changing a position and area of a mask zone stored in the storage unit (150) to the calculated position and area of the privacy zone.

10. The method as claimed in claim 9, further comprising a step of: displaying on a screen a mask zone modified according to the position and area of the privacy zone.

11. The surveillance system as claimed in any one of claims 7 to 10, wherein the mask zone comprises three or more vertices.
